# EUROPEAN PATENT APPLICATION

(11) **EP 4 756 611 A1**
(43) Date of publication of application: **10.06.2026**
(21) Application number: 25221117.2
(22) Date of filing: 05.12.2025
(51) Int. Cl.: G06F 9/451, G06F 9/54, G06F 16/957

(54) **RESOLVING AND HYDRATING DYNAMIC TILE SPECIFICATIONS**

(30) Priority: 05.12.2024 US 202463728487 P; 05.12.2024 US 202463728476 P; 05.12.2024 US 202463728494 P; 02.12.2025 US 202519406075
(71) Applicant: Capital One Services, LLC, McLean, Virginia 22102 (US)
(72) Inventor: DELIA, Christopher, McLean, VA 22102 (US); SHARMA, Amit, McLean, VA 22102 (US); SIVANESAN, Gopinath, McLean, VA 22102 (US); BURUCA, Noel, McLean, VA 22102 (US); BANSKOTA, Rishab, McLean, VA 22102 (US); SELVARAJAN, Inbarajan, McLean, VA 22102 (US); NATEKAR, Devendra, McLean, VA 22102 (US); BERTON, Dominique, McLean, VA 22102 (US)
(74) Representative: Boult Wade Tennant LLP

(57) **Abstract**

In some implementations, a system may receive, from a client device, a client request for a dynamic user experience associated with a user interface, wherein the client request indicates client data associated with the client device. The system may obtain, based on the client data, dynamic data associated with the dynamic user experience and the client device. The system may provide, to a tile utility component of the system, tile definition information, wherein the tile definition information includes the client data, an indication of the dynamic user experience, and the dynamic data. The system may obtain, from the tile utility component, the one or more tile specifications based on the tile definition information. The system may transmit, to the client device, the one or more tile specifications to cause the client device to display the dynamic user experience via the user interface.

## Description

### CROSS-REFERENCE TO RELATED APPLICATIONS

This Patent Application claims priority to U.S. Provisional Patent Application No. 63/728,487, filed on December 5, 2024, and entitled "CAPABILITY NEGOTIATION FOR DYNAMIC USER INTERFACE TILES," to U.S. Provisional Patent Application No. 63/728,476, filed on December 5, 2024, and entitled "EXPERIENCE CONFIGURATION FOR DYNAMIC USER INTERFACE TILES," and to U.S. Provisional Patent Application No. 63/728,494, filed on December 5, 2024, and entitled "RESOLVING AND HYDRATING DYNAMIC TILE SPECIFICATIONS." The disclosures of the prior Applications are considered part of and are incorporated by reference into this Patent Application.

### BACKGROUND

A graphical user interface is a form of user interface that allows users to interact with electronic devices. A web browser or application executing on a client device may provide a graphical user interface that presents one or more pages. A user may navigate to a page by entering a web address into an address bar of the web browser and/or by clicking a link displayed via another page. Navigation to a page may consume resources of a client device on which the web browser is installed or the application is executing, may consume resources of a server that serves the page to the client device, and/or may consume network resources used for communications between the client device and the server.

### SUMMARY

In some implementations, a system for resolving and hydrating dynamic tile specifications includes a tile utility component; one or more memories; and one or more processors, communicatively coupled to the one or more memories, configured to: receive, from a client device, a client request for a dynamic user experience associated with a user interface, wherein the client request indicates client data associated with the client device; obtain, based on the client data, dynamic data associated with the dynamic user experience and the client device; provide, to the tile utility component, tile definition information, wherein the tile definition information includes the client data, an indication of the dynamic user experience, and the dynamic data, and wherein the tile definition information enables the tile utility component to resolve and hydrate one or more tile specifications for the dynamic user experience; obtain, from the tile utility component, the one or more tile specifications based on the tile definition information; and transmit, to the client device, the one or more tile specifications to cause the client device to display the dynamic user experience via the user interface.

In some implementations, a method for resolving and hydrating dynamic tile specifications includes receiving, by a system and from a client device, a client request for a dynamic user experience associated with a user interface, wherein the client request indicates client data associated with the client device; obtaining, by the system and based on the client data, dynamic data associated with the dynamic user experience and the client device; providing, by the system and to a tile utility component of the system, tile definition information, wherein the tile definition information includes the client data, an indication of the dynamic user experience, and the dynamic data, and wherein the tile definition information enables the tile utility component to resolve and hydrate one or more tile specifications for the dynamic user experience; obtaining, by the system and from the tile utility component, the one or more tile specifications based on the tile definition information; and transmitting, by the system and to the client device, the one or more tile specifications to cause the client device to display the dynamic user experience via the user interface.

In some implementations, a system comprising: a tile provider configured to: receive a client request for a dynamic user experience associated with a user interface, wherein the client request indicates client data; obtain, based on the client data, dynamic data associated with the dynamic user experience and the client data; provide, to a tile utility component, tile definition information, wherein the tile definition information includes the client data, an indication of the dynamic user experience, and the dynamic data, and wherein the tile definition information enables the tile utility component to resolve and hydrate one or more tile specifications for the dynamic user experience; obtain, from the tile utility component, the one or more tile specifications based on the tile definition information; and transmit the one or more tile specifications to cause a client device to display the dynamic user experience via the user interface; and the tile utility component configured to: determine, based on the tile definition information, one or more identifiers of the one or more tile specifications; obtain, from a database and based on the one or more identifiers, one or more objects associated with the identifiers of the one or more tile specifications; and insert the dynamic data into the one or more objects to generate the one or more tile specifications.

According to a first aspect of the invention, there is provided a system for resolving and hydrating dynamic tile specifications, the system comprising: a tile utility component; one or more memories; and one or more processors, communicatively coupled to the one or more memories, configured to: receive, from a client device, a client request for a dynamic user experience associated with a user interface, wherein the client request indicates client data associated with the client device; obtain, based on the client data, dynamic data associated with the dynamic user experience and the client device; provide, to the tile utility component, tile definition information, wherein the tile definition information includes the client data, an indication of the dynamic user experience, and the dynamic data, and wherein the tile definition information enables the tile utility component to resolve and hydrate one or more tile specifications for the dynamic user experience; obtain, from the tile utility component, the one or more tile specifications based on the tile definition information; and transmit, to the client device, the one or more tile specifications to cause the client device to display the dynamic user experience via the user interface.

In some embodiments of the first aspect, the tile utility component is associated with a single application programming interface endpoint.

In some embodiments of the first aspect, the tile utility component is configured to: determine, based on the tile definition information, one or more identifiers of the one or more tile specifications; obtain, from a database and based on the one or more identifiers, one or more objects associated with the identifiers of the one or more tile specifications; and insert the dynamic data into the one or more objects to generate the one or more tile specifications.

In some embodiments of the first aspect, the dynamic user experience is associated with multiple variants of the dynamic user experience, wherein the dynamic user experience is associated with one or more segmentation parameters indicating deployment segmentations for the multiple variants, wherein the one or more tile specifications indicate one or more variants of the multiple variants, and wherein the tile utility component is configured to determine the one or more variants based on the one or more segmentation parameters and the dynamic data. In some such embodiments, the one or more processors are further configured to: obtain user engagement information associated with the one or more variants; and update, based on the user engagement information, the one or more segmentation parameters.

In some embodiments of the first aspect, the tile utility component is configured to: determine whether the client device supports the one or more tile specifications based on: capability information indicating one or more client capabilities supported by the client device for dynamic user interface tiles, the one or more tile specifications, and the dynamic data; and provide the one or more tile specifications based on determining that the client device supports the one or more tile specifications.

In some embodiments of the first aspect, the tile utility component is configured to: determine one or more segments to be associated with the dynamic user experience based on the client data and the dynamic data, wherein the one or more segments are associated with respective variants of the dynamic user experience; and generate the one or more tile specifications based on the one or more segments.

In some embodiments of the first aspect, the tile definition information is included in a resolve-hydrate request to the tile utility component.

According to a second aspect of the invention, there is provided a method for resolving and hydrating dynamic tile specifications, comprising: receiving, by a system and from a client device, a client request for a dynamic user experience associated with a user interface, wherein the client request indicates client data associated with the client device; obtaining, by the system and based on the client data, dynamic data associated with the dynamic user experience and the client device; providing, by the system and to a tile utility component of the system, tile definition information, wherein the tile definition information includes the client data, an indication of the dynamic user experience, and the dynamic data, and wherein the tile definition information enables the tile utility component to resolve and hydrate one or more tile specifications for the dynamic user experience; obtaining, by the system and from the tile utility component, the one or more tile specifications based on the tile definition information; and transmitting, by the system and to the client device, the one or more tile specifications to cause the client device to display the dynamic user experience via the user interface.

In some embodiments of the second aspect, providing the tile definition information comprises: providing the tile definition information to a single application programming interface endpoint associated with the tile utility component.

In some embodiments of the second aspect, the method further comprises: determining, by the tile utility component, one or more identifiers of the one or more tile specifications; obtaining, from a database and based on the one or more identifiers, one or more objects associated with the identifiers of the one or more tile specifications; and inserting, by the tile utility component, the dynamic data into the one or more objects to generate the one or more tile specifications.

In some embodiments of the second aspect, the dynamic user experience is associated with multiple variants of the dynamic user experience, wherein the dynamic user experience is associated with one or more segmentation parameters indicating deployment segmentations for the multiple variants, wherein the one or more tile specifications indicate one or more variants of the multiple variants, and the method further comprises: determining, by the tile utility component, the one or more variants based on the one or more segmentation parameters and the dynamic data.

In some embodiments of the second aspect, the method further comprises: determining, by the tile utility component, whether the client device supports the one or more tile specifications based on: capability information indicating one or more client capabilities supported by the client device for dynamic user interface tiles, the one or more tile specifications, and the dynamic data; and providing, by the tile utility component, the one or more tile specifications based on determining that the client device supports the one or more tile specifications.

In some embodiments of the second aspect, the method further comprises: determining, by the tile utility component, one or more segments to be associated with the dynamic user experience based on the client data and the dynamic data, wherein the one or more segments are associated with respective variants of the dynamic user experience; and generating, by the tile utility component, the one or more tile specifications based on the one or more segments.

According to a third aspect of the invention, there is provided a system comprising: a tile provider configured to: receive a client request for a dynamic user experience associated with a user interface, wherein the client request indicates client data; obtain, based on the client data, dynamic data associated with the dynamic user experience and the client data; provide, to a tile utility component, tile definition information, wherein the tile definition information includes the client data, an indication of the dynamic user experience, and the dynamic data, and wherein the tile definition information enables the tile utility component to resolve and hydrate one or more tile specifications for the dynamic user experience; obtain, from the tile utility component, the one or more tile specifications based on the tile definition information; and transmit the one or more tile specifications to cause a client device to display the dynamic user experience via the user interface; and the tile utility component configured to: determine, based on the tile definition information, one or more identifiers of the one or more tile specifications; obtain, from a database and based on the one or more identifiers, one or more objects associated with the identifiers of the one or more tile specifications; and insert the dynamic data into the one or more objects to generate the one or more tile specifications.

In some embodiments of the third aspect, the tile provider, to provide the tile definition information, is configured to: provide the tile definition information to a single application programming interface endpoint associated with the tile utility component.

In some embodiments of the third aspect, the tile provider, to obtain the one or more tile specifications, is configured to: obtain the one or more tile specifications from the single application programming interface endpoint.

In some embodiments of the third aspect, the dynamic user experience is associated with multiple variants of the dynamic user experience, wherein the dynamic user experience is associated with one or more segmentation parameters indicating deployment segmentations for the multiple variants, wherein the one or more tile specifications indicate one or more variants of the multiple variants, and wherein the tile utility component is configured to determine the one or more variants based on the one or more segmentation parameters and the dynamic data.

In some embodiments of the third aspect, the tile utility component is configured to: determine whether the client device supports the one or more tile specifications based on: capability information indicating one or more client capabilities supported by the client device for dynamic user interface tiles, and the dynamic data; and provide the one or more tile specifications to the tile provider based on determining that the client device supports the one or more tile specifications.

In some embodiments of the third aspect, the tile utility component is configured to: determine one or more segments to be associated with the dynamic user experience based on the client data and the dynamic data, wherein the one or more segments are associated with respective variants of the dynamic user experience; and generate the one or more tile specifications based on the one or more segments.

### BRIEF DESCRIPTION OF THE DRAWINGS

Figs. 1A-1D are diagrams of an example associated with resolving and hydrating dynamic tile specifications, in accordance with some embodiments of the present disclosure.
Fig. 2 is a diagram of an example associated with a tile specification for dynamic user interface tiles, in accordance with some embodiments of the present disclosure.
Fig. 3 is a diagram of an example associated with a tile provider system for dynamic user interface tiles, in accordance with some embodiments of the present disclosure.
Fig. 4 is a diagram of an example environment in which systems and/or methods described herein may be implemented, in accordance with some embodiments of the present disclosure.
Fig. 5 is a diagram of example components of a device associated with resolving and hydrating dynamic tile specifications, in accordance with some embodiments of the present disclosure.
Fig. 6 is a flowchart of an example process associated with resolving and hydrating dynamic tile specifications, in accordance with some embodiments of the present disclosure.

### DETAILED DESCRIPTION

The following detailed description of example implementations refers to the accompanying drawings. The same reference numbers in different drawings may identify the same or similar elements.

A user interface of a client device may include a page for presentation via the client device. The user interface may include one or more graphical elements (e.g., for a graphical user interface (GUI)) that are configured to enable a user to interact with the client device (e.g., rather than using text-based commands or other commands). The graphical element(s) may include icons, visual indicators, buttons, menus, windows, text, interactive components, links, and/or visual elements, among other examples. The graphical elements may enable different user experiences to be provided for display to the user via the GUI. As used herein, "user experience" refers to a manner and/or design in which information is presented to a user via one or more graphical elements of a GUI. A user experience may include a design (e.g., a size, a shape, and/or content being displayed) and/or layout of one or more graphical elements. A user experience may be evaluated based on one or more factors, such as usability, accessibility, visual design, responsiveness, and/or ease of navigation, among other examples. For example, a user experience may be designed to be make the GUI intuitive, efficient, and/or enjoyable for a user to accomplish a goal. Therefore, improved user experiences for a GUI may reduce the amount of navigation performed by the user via the client device to accomplish the goal, thereby conserving processing resources, network resources, and/or power resources, among other examples, that would have otherwise been associated with additional navigation via the client device. Further, improved user experiences for a GUI may make data easier to access by enhancing the GUI, thereby enhancing user-friendliness of the client device and the GUI, and improving the ability of the user to use the client device, among other examples.

In some cases, a user experience may be changed or redesigned over time (e.g., to improve the performance and/or effectiveness of the user experience). However, the user experience may be provided via multiple channels that use respective interfaces (e.g., GUIs or other interfaces) to provide the user experience for display (e.g., where each channel is configured for a specific platform while maintaining the design and interactions of the user experience). For example, the multiple channels may include one or more applications (e.g., a web application or a mobile application), a web page, and/or a program (e.g., executing on the client device), among other examples. Additionally, a given channel may be associated with multiple variations or types. For example, a mobile application may be deployed via multiple operating systems that have different design conventions, use different formats, have application programming interface (API) details, and/or support different hardware, among other examples.

Therefore, it may be difficult to maintain consistency when updating or changing a user experience across multiple channels because of the channel-specific (or operating system-specific) differences. For example, it may be difficult to maintain a uniform design and functionality across various platforms (e.g., web, mobile, and/or desktop) that may have different user interface guidelines, technical limitations, and/or performance characteristics. Additionally, when deploying updates for mobile applications, the process may be more complex due to the different requirements of different operating systems. Further, an application may be associated with different versions. Different users may be using different versions of the application, introducing additional complexity associated with deploying the updated user experience across different versions of the same application (e.g., where the different versions may support different features). Additionally, ensuring synchronization of features, performance, and/or updates across all channels without introducing inconsistencies or bugs can be a time-consuming and resource-intensive process. As a result, updating a user experience may consume significant processing resources and/or time associated with designing, configuring, deploying, and/or testing the user experience separately for each channel (and/or for each operating system for a given channel).

In some examples, an update to a user experience may be deployed by deploying updated code for the GUI, such as by updating hypertext markup language (HTML) code. This may include updating the HTML structure for a GUI, such as a layout, content, and/or markup, among other examples. However, in such examples, the updated code may be deployed at a server device and provided to a client device when the client device requests a given user experience. As a result, the user experience (e.g., configured or deployed using the updated code) may not have the same look and feel as the rest of the GUI because the updated code may not use native components of the client device.

In some implementations described herein, a system may provide user experiences in an omni-channel manner using a specification (e.g., referred to herein as a "tile specification" or a "dynamic tile definition"). The tile specification may define a user interface component using a specification language (e.g., a dynamic tile language in JavaScript object notation (JSON)). The system (e.g., one or more server devices) may transmit, and a client device may receive, the tile specification. The client device may render a tile based on the tile specification and using one or more native components to display a tile via a GUI. As used herein, "tile" or "user interface tile" refers to a graphical element that represents an application, function, and/or piece of content, among other examples, within a digital interface, such as a GUI. A tile may be "dynamic" in that the design of the tile, the content presented or displayed via the tile, a function of the tile, and/or a link presented or displayed via the tile, among other examples, may vary over time (e.g., depending on a user experience requested, attributes of the user and/or client device, and/or other factors).

By the system using the tile specification to define the manner in which a user experience is to be displayed via a user interface, the system can dynamically update the user experience by changing information in the tile specification. This enables the system to quickly and easily deploy updates for the user experience because a client device may be configured to obtain the tile specification, extract information from the tile specification, and render the tile using native components to generate the tile for the GUI to be displayed by the client device. This ensures that the tile will be generated in accordance with requirements and/or formats of a given channel because the tile is rendered at the client device (e.g., and is not deployed and/or configured using more complex updates and/or schemes).

In some examples, the system may determine (e.g., identify) one or more tile specifications for a user experience by transmitting a first communication to a resolver component that is configured to determine (e.g., identify) one or more tile specifications based on the user experience. For example, a tile provider component may transmit, and the resolver component may receive, an indication of the user experience. The resolver component may determine the one or more tile specifications based on the user experience and information associated with the client device. The resolver component may transmit, and the tile provider may receive, an indication of the one or more tile specifications. The system may populate (e.g., hydrate) the one or more tile specifications by transmitting a first communication to a hydrator component that is configured to populate (e.g., hydrate) the one or more tile specifications. For example, the tile provider component may transmit, and the hydrator component may receive, an indication of the one or more tile specifications and dynamic data associated with the user experience and the client device. The hydrator component may populate (e.g., hydrate) the one or more tile specifications to include the dynamic data and/or other data. The hydrator component may transmit, and the tile provider component may receive, the one or more tile specifications (e.g., that are hydrated with the dynamic data and/or other data). The tile provider component may transmit, and the client device may receive, the one or more tile specifications (e.g., that are hydrated with the dynamic data and/or other data). This enables the client device to render and display one or more user interface tiles based on the one or more tile specifications (e.g., that are hydrated with the dynamic data and/or other data).

In some examples, using separate components to resolve (e.g., determine and/or identify) the tile specification(s) and to populate (e.g., hydrate) the tile specification(s) may provide flexibility for separating managing, updating, and/or configuring the resolving and hydrating of tile specifications. However, using the separate components consumes network resources as the tile provider component may transmit multiple communications to resolve (e.g., determine and/or identify) the tile specification(s) and to populate (e.g., hydrate) the tile specification(s). Additionally, using the separate components may increase latency associated with the multiple communications transmitted by the tile provider component.

Some implementations described herein enable resolving and hydrating of tile specifications for dynamic user interface tiles. In some implementations, a tile provider system may use a component (e.g., a tile utility component) to resolve (e.g., determine and/or identify) the tile specification(s) and to populate (e.g., hydrate) the tile specification(s). For example, the tile provider system may communicate with the component using a single interface (e.g., a single API endpoint). For example, the tile provider system (e.g., a tile provider component of the tile provider system) may provide, to a tile utility component (e.g., of the tile provider system), tile definition information. The tile definition information may include client data, an indication of the dynamic user experience, and/or dynamic data, among other examples. The tile definition information may enable the tile utility component to resolve and hydrate one or more tile specifications for the dynamic user experience. The tile provider system may transmit, to the client device, the one or more tile specifications to cause the client device to display the dynamic user experience via a user interface.

For example, the tile utility component may determine, based on the tile definition information, one or more identifiers of the one or more tile specifications. The tile utility component may obtain, from a database and based on the one or more identifiers, one or more objects associated with the identifiers of the one or more tile specifications. The tile utility component may insert the dynamic data into the one or more objects to generate the one or more tile specifications. In some implementations, the tile utility component may determine whether the client device supports the one or more tile specifications based on capability information indicating one or more client capabilities supported by the client device for dynamic user interface tiles, the one or more tile specifications, and the dynamic data.

As a result, the tile provider system may conserve network resources that would have otherwise been associated with transmitting multiple communications to determine (e.g., resolve) and populate (e.g., hydrate) the tile specification(s). Additionally, by the tile provider system using the tile utility component to determine and populate the tile specification(s), latency associated with generating the tile specification(s) may be reduced because of the reduced quantity of transmissions associated with determining and resolving the tile specification(s). Further, the tile utility component may make improved determinations (e.g., to determine which tile specification(s) should be used and/or to determine if a client device or application supports determined tile specification(s)) for the tile specification because the tile utility component has access to the dynamic data. For example, the tile utility component may use hydrated tile specifications when determining whether the client device and/or application supports the one or more tile specifications. By the tile utility component using the hydrated tile specifications, the tile utility component may use tile specification(s) that are closer to (e.g., that are) the tile specification(s) that will be provided to the client device, thereby enabling the tile utility component to make improved determinations as to whether the client device and/or application supports the one or more tile specifications.

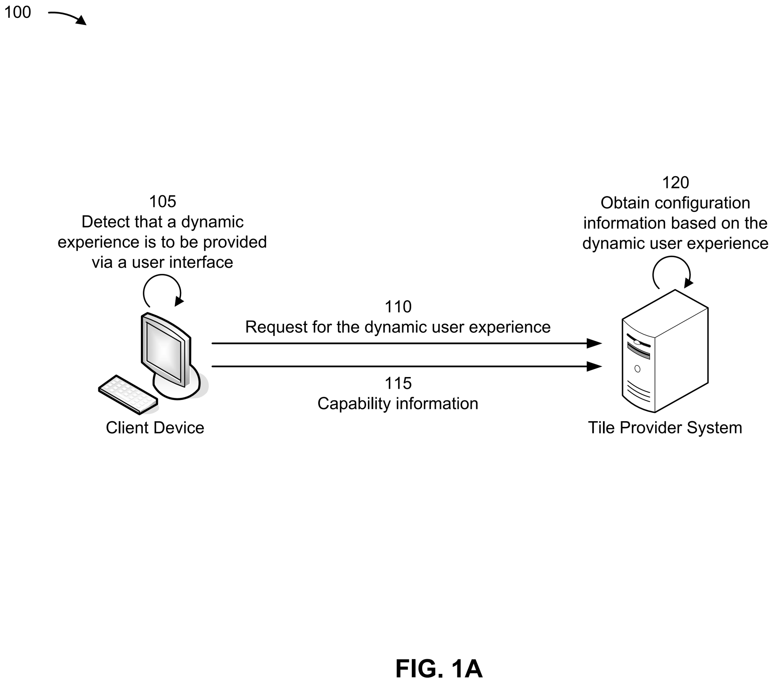

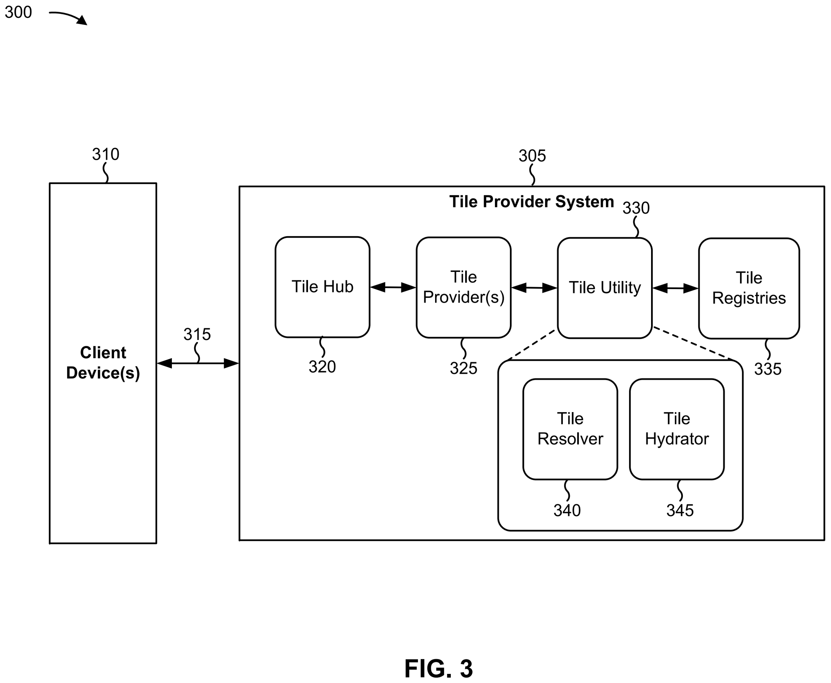

Figs. 1A-1D are diagrams of an example 100 associated with resolving and hydrating dynamic tile specifications. As shown in Figs. 1A-1D, example 100 includes a tile provider system, a client device, and a data provider. These devices are described in more detail in connection with Figs. 3-5.

As shown in Fig. 1A, and by reference number 105, the client device may detect that a dynamic user experience is to be provided (e.g., displayed) via a user interface (e.g., a GUI). For example, the client device may detect that a user has navigated to a page, and/or interacted with a graphical element of the user interface, among other examples, that is configured to cause the client device to provide the dynamic user experience. Additionally, or alternatively, the client device may detect or determine that the user interface has been opened via the client device.

As shown by reference number 110, the client device may transmit, and the tile provider system may receive, a request for the dynamic user experience associated with the user interface. For example, the client device may determine the dynamic user experience based on user interaction with the user interface. The client device may determine the dynamic user experience based on the user interface, the page, and/or other information to be displayed via the user interface. The request for the dynamic user experience may include an identifier of the dynamic user experience.

Additionally, the request for the dynamic user experience may include client data associated with the client device. The client data may include an identifier of the client device, and/or an account identifier of an account of a user (e.g., an account that is logged in via the user interface), and/or a user identifier of the user (e.g., a name, an address, and/or other information associated with the user), among other examples.

As shown by reference number 115, the client device may transmit, and the tile provider system may receive, capability information. The capability information may indicate one or more client capabilities supported by the client device for dynamic user interface tiles (e.g., for the dynamic user experience and/or for other dynamic user experiences). In some examples, the client device may transmit, and the tile provider system may receive, the capability information in association with the request for the dynamic user experience. For example, the capability information may be included in the request for the dynamic user experience (e.g., in the same message or transmission). As another example, the client device may transmit the capability information based on (e.g., after) transmitting the request for the dynamic user experience (e.g., in a separate message or transmission).

The capability information may be indicated via a data structure or a data object. The capability information may be included in a data object that includes one or more key-value pairs and/or an ordered list (or array) of values that indicate respective client capabilities of the client device. In some implementations, the capability information may be indicated using code, such as JSON code. For example, the capability information may be included in a JSON object, a JSON payload, and/or a JSON document.

The capability information may include one or more client capabilities associated with dynamic user interface tiles. In some implementations, the capability information may include device information. The device information may include an identifier of an application that is configured to display the user interface via the client device, a version of the application, and/or a channel associated with the application, among other examples. The identifier of the application (e.g., a client name) may be an identifier of the application that is configured to display the user interface tiles. By the client device including the channel (e.g., a channel category) in the capability information, the tile provider system may identify channel-specific information to be included in a tile specification, as described in more detail elsewhere herein. For example, for a web-based channel, a label of an interactive user interface element may be "click here" (e.g., because a mouse may be used as an input component for the web-based channel), whereas the label for the same interactive user interface element for a mobile-based channel may be "touch here" or "tap here" (e.g., because a mobile-based channel may be associated with a touch screen as a display screen for the user interface).

The capability information may include tile capability information. The tile capability information may include one or more client capabilities associated with content and/or actions to be associated with user interface tiles, as described herein. For example, the capability information may include one or more user interface actions supported by the application. The one or more user interface actions may be action types supported by the application and/or the client device. A user interface action may be an action that the client device (and/or application) is configured to perform based on a user interaction with a user interface element displayed via a user interface tile. The one or more user interface actions may correspond to action types that can be indicated by a tile specification generated by the tile provider system. In some implementations, the capability information may include one or more image schema supported by the application and/or the client device. For example, an image schema may include a format for indicating a source of an image to be included in a user interface tile, such as a uniform resource locator (URL) format (e.g., a hypertext transfer protocol secure (HTTPS) format), a local data source format, and/or another format.

In some implementations, the capability information may include one or more user interface events supported by the application and/or the client device. A user interface event may be associated with a user interface action that is to be performed locally on the client device. In some implementations, the capability information may include one or more markup types supported by the application and/or client device. The one or more markup types may include an action type, a bold type, an italics type, a list item type, and/or a phone type, among other examples.

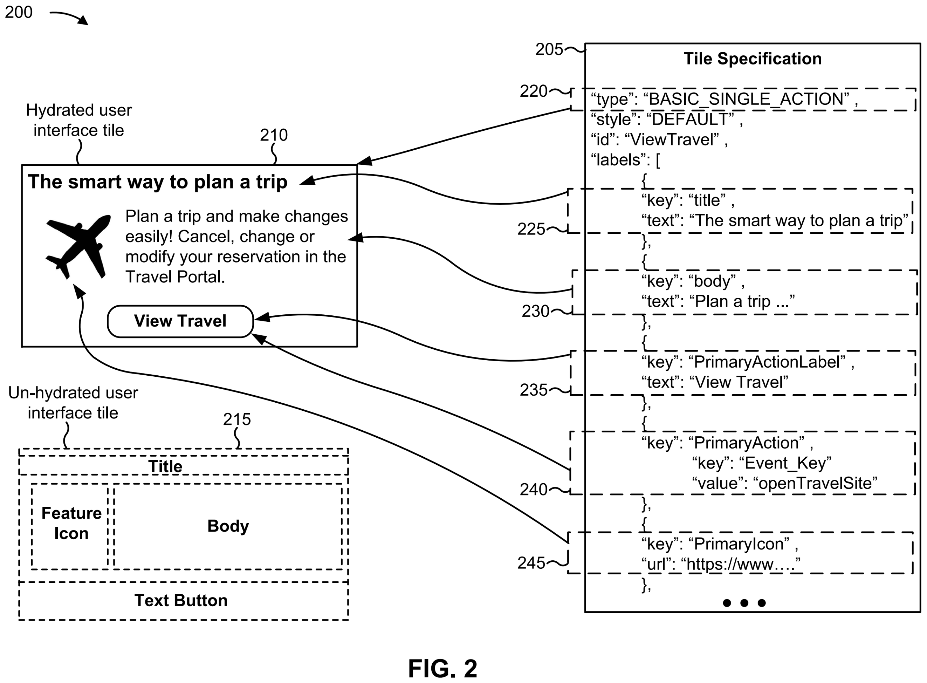

The capability information may include one or more supported tile elements associated with a tile specifications. A tile element may be a visual and/or graphical element included in a user interface tile. For example, the capability information may indicate one or more types of user interface elements (e.g., tile elements) that the application and/or client device can render. In some implementations, the capability information may include one or more supported tile types. A tile type may be a type included in a tile specification, as depicted and described in more detail in connection with Fig. 2. For example, a tile type may indicate a format, design, and/or layout of a user interface tile, such as via a user interface tile template depicted and described in more detail in connection with Fig. 2. The capability information may indicate which tile types are supported by the application and/or client device.

In some implementations, the capability information may include one or more segmentation parameters indicating deployment segmentations for the multiple variants of the dynamic user experience. For example, the dynamic user experience may be associated with multiple variants. Each variant may vary the design, layout, text, image(s), and/or information provided for display via a user interface tile. In some implementations, each variant may be associated with accomplishing the same task, goal, and/or action (e.g., but with varied approaches). This may be useful for experimentation and/or for more tailored user experiences for different segments of the population. The one or more segmentation parameters may indicate percentages and/or portions of users that are to receive respective variants of the dynamic user experience.

As shown by reference number 120, the tile provider system may obtain configuration information based on the dynamic user experience. For example, the dynamic user experience may be associated with an identifier. Configuration information may be associated with respective identifiers of dynamic user experiences. For example, the tile provider system may store (and/or may have access to) a mapping between identifiers of dynamic user experiences and sets of configuration information. For example, the tile provider system may have access to memory (e.g., a database, a registry, a library, and/or a data structure) in which the mapping between identifiers of dynamic user experiences and sets of configuration information is stored.

The configuration information may be a data object that includes information (e.g., one or more key-value pairs and/or an ordered list (or array) of values) that indicate how, and/or a manner in which, the tile provider system is to obtain dynamic data for the dynamic user experience. In some implementations, the configuration information may use code, such as JSON code, to indicate the information. For example, the configuration information may be a JSON object, a JSON payload, a JSON configuration, and/or a JSON document. In other implementations, other types of code (e.g., other than JSON code) may be used. The configuration information may indicate a data provider for the dynamic user experience. For example the configuration information may include a data provider field that indicates the data provider.

The data provider may be a data orchestrator. For example, the tile provider system may obtain data to be used to populate (e.g., hydrate) tile specifications. Such data may be referred to herein as "dynamic" data. The data may be dynamic in that the data is obtained during the generation of the tile specification(s) for a requested user experience (e.g., and therefore may change over time and/or be specific to the time at which the data is obtained during the generation of the tile specification(s)). In some examples, a user experience and/or a tile specification may use data that is obtained from one or more data providers (e.g., data sources), such as a system, service, microservice, application, and/or API endpoint, among other examples. Therefore, the tile provider system may use a data orchestration component to orchestrate (e.g., manage, configure, transmit, and/or receive) requests for dynamic data. Data orchestration is the process of gathering siloed data from various locations, and organizing the data into a consistent, usable format. The data orchestration component may facilitate efficient and effective data retrieval by enabling seamless integration with data providers, rule engines, and/or external services, among other examples.

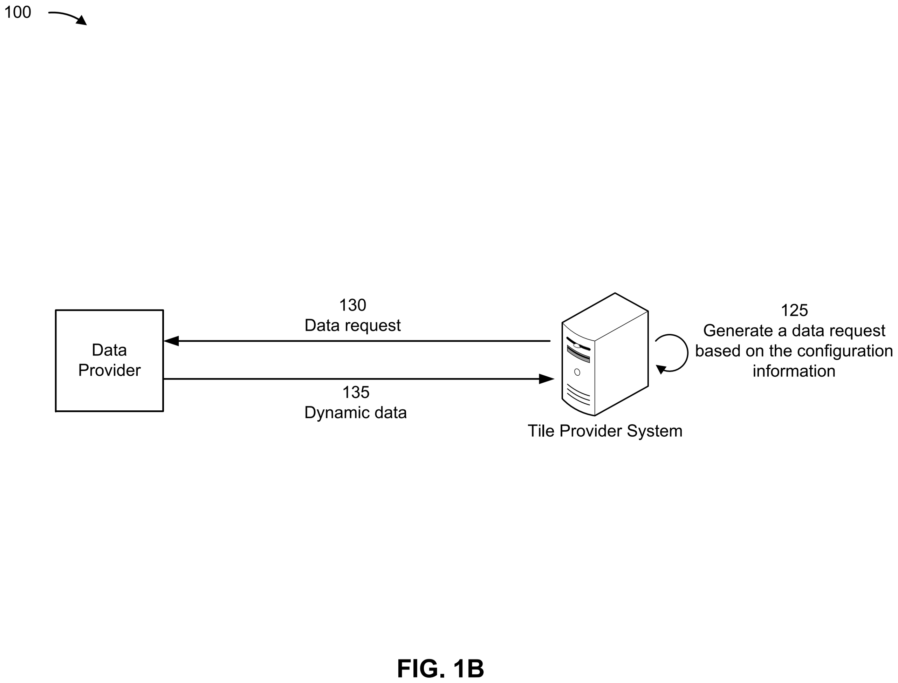

As shown in Fig. 1B, and by reference number 125, the tile provider system may generate a data request based on the configuration information. The data request may be a request for dynamic data for the user experience. For example, the tile provider system may generate the data request in a format indicated by the configuration information. The tile provider system may generate the data request to include information indicated by the configuration information. The tile provider system may generate the data request using a format indicated by the configuration information.

In some implementations, the tile provider system may generate the data request based on the type of data provider. For example, if the type of data provider is the data orchestrator, then the tile provider system may generate a declarative data fetching query. A declarative fetching query may be a query for data that indicates (e.g., specifies) what data is requested, but not how the data is to be retrieved. An example of a declarative fetching query is a GraphQL ^{®} query.

In some implementations, the tile provider system may generate the data request to indicate client data. For example, the request from the client device (e.g., as described in connection with reference number 110) may indicate the client data. The client data may be associated with the client device, the application configured to display the user interface, and/or the user that is using the client device, among other examples. For example, the client data may include a name of the user, an account identifier or an account number, a name or identifier of the application, a date of birth of the user, and/or an address of the user, among other examples. For example, the experience configuration may indicate one or more types of data to be included in the data request and how to format the type(s) of data in the data request.

As shown by reference number 130, the tile provider system may transmit, and the data provider may receive, the data request. The data provider may be configured to obtain data requested by the data request from one or more data sources. Additionally, or alternatively, the data provider may be configured to store and/or modify data as indicated by the data request. In some implementations, as shown by reference number 135, the data provider may transmit, and the tile provider system may receive, dynamic data indicated by the data request.

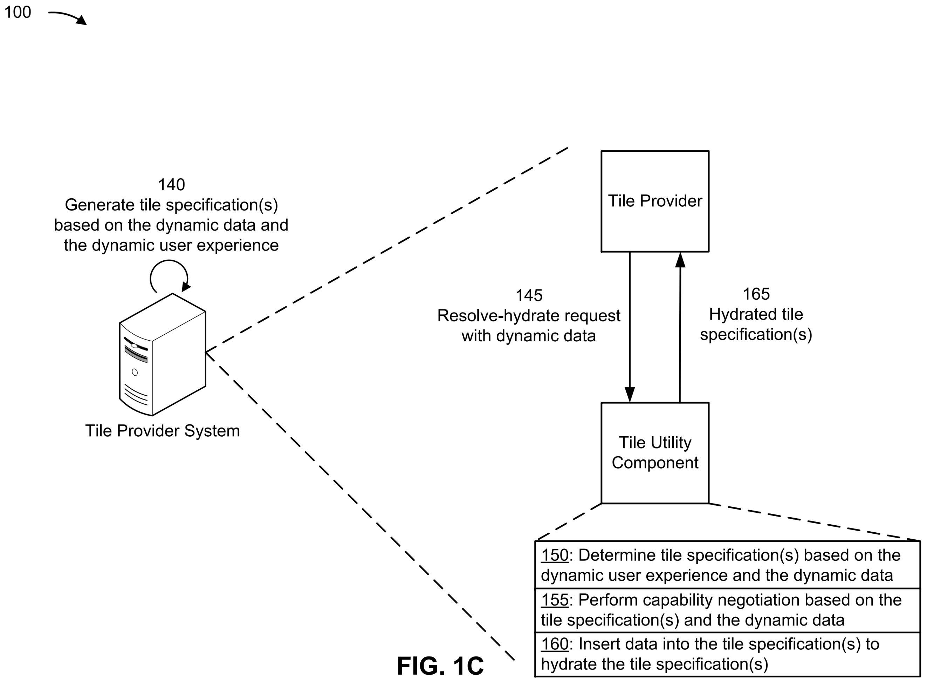

As shown in Fig. 1C, and by reference number 140, the tile provider system may generate one or more tile specifications based on the dynamic data and the dynamic user experience. For example, the tile provider system may generate the one or more tile specifications to include the dynamic data obtained via the data provider. A tile specification is depicted and described in more detail in connection with Fig. 2.

For example, as shown in Fig. 1C, the tile provider system may include a tile provider component and a tile utility component (e.g., as described in more detail elsewhere herein, such as in connection with Fig. 3). The tile provider component and the tile utility component may be configured to communicate via a single interface (e.g., a single communication interface, such as a single API endpoint). For example, as shown by reference number 145, the tile provider may provide, and the tile utility component may obtain, a resolve-hydrate request with dynamic data.

For example, the tile provider system (e.g., via the tile provider component) may provide, to the tile utility component, tile definition information. The tile definition information may include the dynamic data, the client data, and/or an indication of the dynamic user experience, among other examples. The tile definition information may enable the tile utility component to resolve and hydrate one or more tile specifications for the dynamic user experience.

The tile provider component may transmit the tile definition information via the interface between the tile provider component and the tile utility component. In some implementations, the tile definition information may be included in a single communication (e.g., the resolve-hydrate request). For example, the resolve-hydrate request may be a request for the tile utility component to identify (e.g., resolve) and populate (e.g., hydrate) one or more tile specifications for the dynamic user experience. The communication of the resolve-hydrate request (e.g., via the single communication) may cause the tile utility component to identify (e.g., resolve) and populate (e.g., hydrate) one or more tile specifications for the dynamic user experience. This conserves network resources and/or reduces latency that would have otherwise been associated with the tile provider component transmitting multiple communications to cause the tile utility component to identify (e.g., resolve) and populate (e.g., hydrate) one or more tile specifications for the dynamic user experience (e.g., a first communication to cause a resolver component to identify the one or more tile specifications and a second communication to cause a hydrator component to populate the identified tile specification(s)). Further, this may improve cache efficiency by reducing the number of duplicated communications (e.g., duplicated API calls) associatred with identifying and populating the one or more tile specifications (e.g., duplicated API calls by the tile utility component to tile registries or other components).

As shown by reference number 150, the tile utility component may determine (e.g., identify) one or more tile specifications based on the tile definition information (e.g., based on the dynamic user experience, the dynamic data, and/or the client data). By the tile utility component obtaining the dynamic data to be used to identify (e.g., resolve) the one or more tile specifications, the tile utility component may be enabled to make improved determinations as to which tile specification(s) should be used to provide the dynamic user experience for a particular client device or user (e.g., based on the dynamic data).

The tile provider system (e.g., the tile utility component) may determine, based on the tile definition information, one or more identifiers of one or more tile specifications. The tile provider system (e.g., the tile utility component) may obtain, from a database (e.g., a tile registry) and based on the one or more identifiers, one or more objects associated with the identifiers of the one or more tile specifications. The one or more objects may be tile specification(s) with one or more placeholder fields (e.g., in which dynamic data is to be inserted). The tile provider system (e.g., the tile utility component) may insert the dynamic data into the one or more objects to generate the one or more tile specifications.

In some implementations, by the tile utility component obtaining the dynamic data to be used to identify (e.g., resolve) the one or more tile specifications, the tile utility component may improve segmentation determinations for different variants and/or versions of a dynamic user experience to be provided to a particular client device or user (e.g., based on the dynamic data). For example, the dynamic user experience may be associated with multiple variants of the dynamic user experience. In some implementations, the tile provider system (e.g., the tile utility component) may obtain one or more segmentation parameters indicating deployment segmentations for the multiple variants of the dynamic user experience. For example, the dynamic user experience may be associated with multiple variants. Each variant may vary the design, layout, text, image(s), and/or information provided for display via a user interface tile. In some implementations, each variant may be associated with accomplishing the same task, goal, and/or action (e.g., but with varied approaches). This may be useful for experimentation and/or for more tailored user experiences for different segments of the population. The one or more segmentation parameters may indicate percentages and/or portions of users that are to receive respective variants of the dynamic user experience.

The tile provider system (e.g., the tile utility component) may determine which variant is to be provided to the client device based on the dynamic data. The one or more tile specifications (e.g., identified by the tile utility component) may indicate one or more variants of the multiple variants of the dynamic user experience. The tile provider system (e.g., the tile utility component) may determine the one or more variants based on the one or more segmentation parameters and the dynamic data.

For example, the dynamic data may indicate a value of a parameter (e.g., a current account balance for an account). If the value satisfies a threshold, then the tile provider system (e.g., the tile utility component) may determine that a first variant is to be provided to the client device. If the value does not satisfy the threshold, then the tile provider system (e.g., the tile utility component) may determine that a second variant is to be provided to the client device. For example, if the account balance satisfies an account threshold, then the tile provider system (e.g., the tile utility component) may determine that a certain variant of a dynamic user experience is to be provided to the client device. As another example, the dynamic data may indicate a credit score associated with an account. If the credit score satisfies a credit threshold, then the tile provider system (e.g., the tile utility component) may determine that a first variant is to be provided to the client device. If the credit score does not satisfy the credit threshold, then the tile provider system (e.g., the tile utility component) may determine that a second variant is to be provided to the client device.

In some implementations, the tile provider system (e.g., the tile utility component) may determine one or more segments to be associated with the dynamic user experience based on the client data and the dynamic data. The one or more segments may be associated with respective variants of the dynamic user experience. The tile provider system (e.g., the tile utility component) may generate the one or more tile specifications based on the one or more segments. For example, the tile provider system (e.g., the tile utility component) may determine one or more variants (e.g., as described above) to be provided to the client device based on the client data and the dynamic data. This enables improved segmentation for the multiple variants provided for the dynamic user experience because the tile utility component has additional context to segment a population of users into different segments and/or variants, thereby improving the performance of the dynamic user interface tile, improving access to data provided via the dynamic user interface tile, and/or improving the user experience.

As shown by reference number 155, the tile utility component may perform a capability negotiation based on the tile specification(s) and the dynamic data. For example, the capability negotiation may include the tile utility component determining whether the client device (and/or an application providing the user interface) supports the one or more tile specifications based on capability information of the client device and/or the application. For example, the tile provider system (e.g., the tile utility component) may determine whether the client device supports the one or more tile specifications based on the capability information (e.g., indicating one or more client capabilities supported by the client device for dynamic user interface tiles), the one or more tile specifications, and the dynamic data. By the tile utility component using the dynamic data as part of the capability negotiation, the tile utility component may use tile specification(s) that are (or that are closer to) the version to actually be provided to the client device when determining whether the client device supports the one or more tile specifications.

For example, the tile utility component may determine whether the client device supports the one or more tile specifications using at least partially hydrated tile specifications (e.g., hydrated using the dynamic data). For example, the tile provider system may generate the tile specification such that the tile specification includes information and/or features that are supported by the client device (e.g., that can be interpreted and/or rendered by the client device or the application). Additionally, the tile provider system may generate the tile specification such that the tile specification includes information and/or features that are supported by the tile provider system. This improves the determination of the tile utility component as compared to the tile utility component using object(s) corresponding to respective tile specifications as part of the capability negation (e.g., where an object is a tile specification with one or more placeholder or variable fields). Additionally, this reduces the likelihood of the tile provider system providing a tile specification to the client device where the tile specification cannot be rendered and/or interpreted by the client device, thereby conserving network resources and/or processing resources that would have otherwise been associated with transmitting such tile specifications and/or with the client device attempting to interpret such tile specifications.

In some implementations, the tile provider system may support one or more provider capabilities. The one or more provider capabilities may be similar to the one or more client capabilities. For example, the one or more provider capabilities may indicate capabilities for similar information or actions as described above in connection with the capability information. The tile provider system (e.g., the tile utility component) may compare the one or more provider capabilities to the one or more client capabilities. If the one or more provider capabilities and the one or more client capabilities indicate that the client device (and/or application that provides the user interface) and the tile provider system support the same set of capabilities, then the tile provider system may proceed with generating one or more tile specifications without capability-based modifications or considerations. If the one or more provider capabilities and the one or more client capabilities indicate that the client device (and/or application that provides the user interface) supports more capabilities than the tile provider system supports (e.g., supports more user interface actions than the tile provider system can support for the dynamic user interface), then the tile provider system may will generate and provide one or more tile specifications based on the one or more provider capabilities. If the one or more provider capabilities and the one or more client capabilities indicate that the tile provider system supports more capabilities than the client device (and/or application that provides the user interface), then the tile provider system may will generate and provide one or more tile specifications based on the one or more client capabilities (e.g., based on the capability information). This ensures backward compatibility for the user interface tiles as new features are deployed and/or introduced.

As shown by reference number 160, the tile utility component may insert data into the one or more tile specifications (e.g., into objects corresponding to respective tile specifications) to hydrate (e.g., populate) the one or more tile specifications. The data may include the dynamic data, the client data, and/or other types of data. As used herein, a "hydrated" tile specification refers to a tile specification that has had the data inserted into the tile specification (e.g., into one or more placeholder fields or variable fields of the tile specification). For example, the tile utility component may obtain (e.g., from the tile registry) the identified tile specification(s) (e.g., as described above). The tile utility component may identify one or more placeholder fields and/or variable fields in the tile specification(s). The tile utility component may insert appropriate data (e.g., from the dynamic data, the client data, and/or other data) into respective fields of the one or more placeholder fields and/or variable fields in the tile specification(s).

In some implementations, one or more operations described herein as being performed by the tile utility component may be performed in parallel (e.g., at the same time). For example, the tile utility component may perform the capability negotiation and may hydrate the one or more tile specifications in parallel (e.g., at the same time). This reduces the latency associated with generating the one or more tile specifications. Additionally, this enables the tile utility component to have access to additional context (e.g., the at least partially hydrated tile specification(s) and/or the dynamic data) when performing other operations, such as the capability negotiation and/or segmentation (e.g., for multiple variants of the dynamic user experience).

As shown by reference number 165, the tile utility component may provide, and the tile provider component may obtain, the one or more hydrated tile specifications. For example, the tile provider component may obtain the one or more tile specifications (e.g., hydrated tile specification(s)) via the interface between the tile utility component and the tile provider component. For example, the tile provider component may obtain the one or more tile specifications from a single API endpoint (e.g., the same API endpoint to which the resolve-hydrate request was transmitted, as described in connection with reference number 145). As a result, the tile provider component may request and receive one or more tile specifications (e.g., hydrated tile specification(s)) via two communications (e.g., the resolve-hydrate request and the response including the hydrated tile specification(s)) via a single interface (e.g., a single API endpoint). This improves the efficiency and/or conserves network resources associated with the tile provider component obtaining the hydrated tile specification(s) for the dynamic user experience.

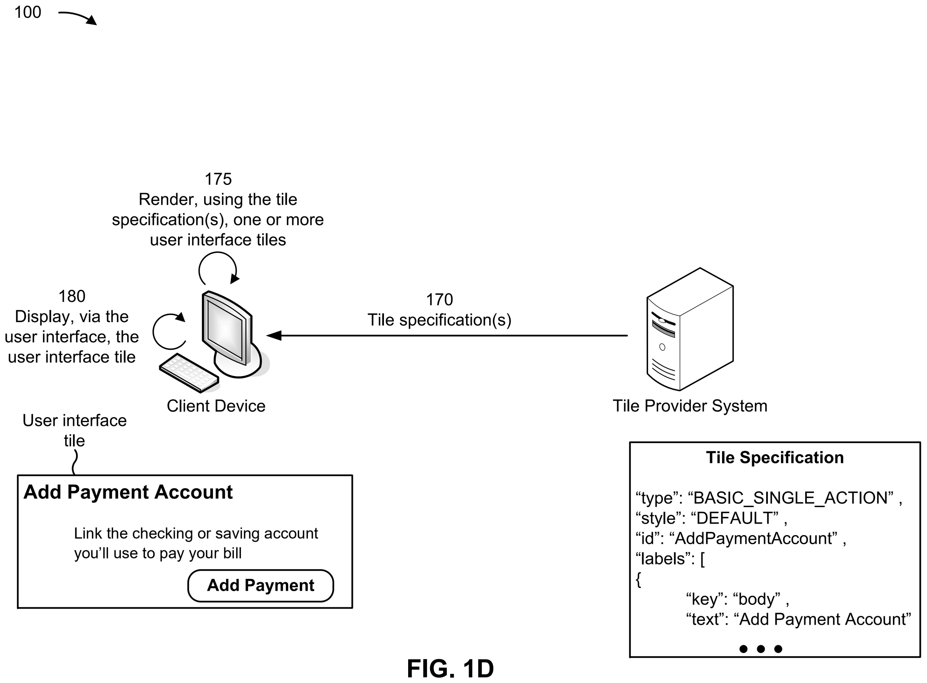

As shown in Fig. 1D, and by reference number 170, the tile provider system may transmit, and the client device may receive, the one or more tile specifications. The one or more tile specifications may indicate user interface information for a user interface tile associated with the dynamic user experience (e.g., requested by the client device as described in connection with Fig. 1A and reference number 110). As described in more detail elsewhere herein, the one or more tile specifications may be a data object that indicates user interface information in a channel agnostic manner. The structure and/or content of the tile specification is depicted and described in more detail in connection with Fig. 2.

As shown by reference number 175, the client device may render, using the tile specification, the user interface tile. For example, the client device may render one or more user interface elements associated with the user interface tile based on the tile specification. For example, the client device may interpret and/or decode the tile specification to obtain (e.g., extract) the user interface information. The client device may use a rendering engine (e.g., of the client device and/or application) to process the user interface information and translate the user interface information into visual components (e.g., native components) of a user interface framework that the client device is configured to use. The client device may render the user interface tile (e.g., using the user interface information obtained from the tile specification) in accordance with the rendering engine, operating system, and/or user interface framework that is used by the client device and/or the application. For example, the client device may obtain information for user interface templates and/or user interface actions (e.g., indicated by the tile specification) from local libraries (e.g., stored by the client device and/or accessible by the client device), as described in more detail elsewhere herein (such as in connection with Fig. 3). This significantly reduces the complexity and increases the flexibility for modifying and/or updating user experiences provided by the user interface because the client device (and/or the application) can use the rendering engine and/or visual components (e.g., native components) of the user interface framework of the client device (and/or the application).

As shown by reference number 180, the client device may display, via the user interface, the user interface tile. For example, the client device may provide the one or more user interface elements of the user interface tile for display via the user interface. In some implementations, the client device may obtain user engagement information associated with the user interface tile. As an example, the user engagement information may indicate how frequently the user interface tile (or one or more user interface elements) is interacted with (such as click rates, hover events, or form submissions), a duration of interaction or user actions taken after interacting with the element, the number of times the user interface tile (or one or more user interface elements) is interacted with, user feedback information (e.g., in a feedback form), repeat interactions with the user interface tile, and/or conversion rates (e.g., a rate of a button press or interaction leading to a result, such as opening a new page), among other examples.

In some implementations, the user interface tile may be associated with a variant of the dynamic user experience, as described elsewhere herein. In such examples, the client device may obtain user engagement information associated with the variant. In some implementations, the client device may transmit, and the tile provider system may receive, the user engagement information associated with the user interface tile. The tile provider system may update the tile specification(s) provided by the tile provider system for the dynamic user experience based on the user engagement information. For example, the tile provider system may update a feature, a text label, an image, a title, and/or other user interface information indicated by the tile specification based on the user engagement information. The tile provider system may update the tile specification(s) in an attempt to improve the user engagement information (e.g., to improve interaction rates, click rates, and/or conversion rates, among other user engagement information) for the dynamic user experience.

In some implementations, the tile provider system may update, based on the user engagement information, the one or more segmentation parameters. For example, the user engagement information may indicate a performance level (e.g., high performance, low performance, or another performance level) a given variant. The tile provider system may update the one or more segmentation parameters based on the performance level. For example, if the user engagement information indicates that the variant is performing better than other variants (e.g., if the user engagement information indicates that the variant has higher interaction rates, click rates, and/or conversion rates than other variants), then the tile provider system may update the one or more segmentation parameters to increase the portion of the population of users that is provided with the variant. Alternatively, if the user engagement information indicates that the variant is performing worse than other variants (e.g., if the user engagement information indicates that the variant has lower interaction rates, click rates, and/or conversion rates than other variants), then the tile provider system may update the one or more segmentation parameters to decrease the portion of the population of users that is provided with the variant. This enables the tile provider system to dynamically update the one or more segmentation parameters to improve the performance (e.g., the interaction rates, click rates, and/or conversion rates) for the dynamic user experience.

As indicated above, Figs. 1A-1D are provided as an example. Other examples may differ from what is described with regard to Figs. 1A-1D.

Fig. 2 is a diagram of an example 200 associated with a tile specification 205 for dynamic user interface tiles. As described elsewhere herein, the tile specification 205 may include information (e.g., code and/or instructions) that enables a client device (e.g., the client device described in connection with Figs. 1A-1C and 2 and/or elsewhere herein) to render a user interface tile 210 (e.g., shown in Fig. 2 as a hydrated user interface tile). As used herein, a "hydrated" user interface tile refers to a user interface tile with inserted data or information (e.g., as indicated by the tile specification 205).

For example, a user interface tile template 215 may define a template for a type 220 of user interface tile. The user interface tile template 215 may be an un-hydrated user interface tile (e.g., a user interface tile without data or information inserted). For example, the user interface tile template 215 may define a generic template for the type 220 of user interface tile. As shown in Fig. 2, the user interface tile template 215 may indicate a location, position, orientation, and/or size for one or more fields. As shown in Fig. 2, the one or more fields may include a title, a feature icon, a label, and/or a text button, among other examples. The one or more fields may correspond to user interface elements of the user interface tile 210.

The tile specification 205 may be an information set that defines how to render the user interface tile 210 and/or what information is to be included in the user interface tile 210. The tile specification 205 may be a data object that includes one or more key-value pairs and/or an ordered list (or array) of values that indicate the information set. In some implementations, the tile specification 205 may use code, such as JSON code, to indicate the information set. For example, the tile specification 205 may be a JSON object, a JSON payload, and/or a JSON document.

The tile specification 205 may indicate the type 220 of the user interface tile 210. The type 220 may indicate that the user interface tile template 215 is to be used to render the user interface tile 210. For example, the type 220 may enable the client device to identify the user interface tile template 215 that is to be used to render the user interface tile 210. The user interface tile template 215 may define or indicate one or more native components (e.g., the one or more fields) to be used by the client device to render the user interface tile 210. The type 220 of the user interface tile 210 may be a basic single action tile (e.g., a user interface tile configured or designed to enable a user to perform a basic single action, such as navigate to a travel website as shown in Fig. 2). Other types of user interface tiles may be defined or configured (e.g., for performing other actions or displaying other types of content) in a similar manner, such as by using other user interface tile templates.

The tile specification 205 may include one or more labels (e.g., key-value pairs) for indicating information to be included in the user interface tile 210 and/or actions to be provided by the user interface tile 210. The one or more labels may indicate user interface information for the user interface tile 210. The one or more labels may indicate information and/or elements to be inserted into the one or more fields of the user interface tile template 215. For example, the one or more labels may define text and/or image content to be displayed via the user interface tile 210.

As shown in Fig. 2, the one or more labels may include a title 225. The title 225 may indicate information to be inserted into a title field of the user interface tile template 215. For example, a key value may indicate that the information is associated with the title 225 and text value may indicate the text to be inserted into the title field (e.g., "The smart way to plan a trip" as shown in Fig. 2). The one or more labels may include a body 230. The body 230 may indicate information to be inserted into the body of the user interface tile template 215, such as the label field shown in Fig. 2. For example, a key value may indicate that the information is associated with the body 230 and text value may indicate the text to be inserted into the label field shown in Fig. 2.

The one or more labels may include an action label 235. The action label 235 may indicate information (e.g., text) to be used as a label for an interactive user interface element that is configured to enable the user to perform an action. For example, as described above, the type 220 may be associated with a single action. The user interface tile template 215 may include field associated with an interactive user interface element that, when interacted with by a user, causes the client device to perform an action. For example, the field associated with an interactive user interface element is shown in Fig. 2 as the text button field. The action label 235 may indicate a label for the interactive user interface element to be included in the user interface tile 210. For example, a key value may indicate that the information is associated with the action label 235 and text value may indicate the text to be inserted as the label (e.g., "View Travel" as shown in Fig. 2).

The tile specification 205 may indicate one or more actions 240 to be enabled by the user interface tile 210. For example, the one or more actions 240 may be one or more actions to be performed by the client device based on a user interacting with an interactive user interface element of the user interface tile 210. For example, the one or more actions 240 may indicate what the client device is to do based on (e.g., when or after) detecting that a user has interacted with an interactive user interface element of the user interface tile 210. In some implementations, such as when the type 220 is associated with multiple actions, the one or more actions 240 may indicate which interactive user interface elements respective actions of the multiple actions are to be associated with. As an example, the one or more actions 240 indicated by the tile specification 205 may include navigating to a travel website or page (e.g., the travel website or page may be indicated by the value "openTravelSite" as shown in Fig. 2). The client device may configure the user interface tile 210 such that the client device navigates to the indicated travel website or page based on a user interacting with (e.g., clicking, selecting, or touching) the interactive user element (e.g., shown with the action label 235 of "View Travel" in Fig. 2).

The tile specification 205 may indicate image content to be displayed via the user interface tile 210. For example, the tile specification 205 may indicate an icon 245 to be displayed via the user interface tile 210. The tile specification 205 may indicate a source from which the image content can be obtained or retrieved. For example, as shown in Fig. 2, the tile specification 205 may indicate a URL from which the icon 245 shown in the user interface tile 210 can be obtained or retrieved.

The tile specification 205 shown in Fig. 2 is provided as an example. In other examples, a tile specification may indicate different labels, a different quantity of labels, a different type 220, different action(s) 240, and/or a different quantity of actions 240, among other examples. The tile specification 205 may enable the user interface tile template 215 to be reused for different user experiences. For example, by the tile provider system changing information indicated by the tile specification 205 for the type 220, the user interface tile template 215 can be used by the client device to render user interface tiles for different user experiences. Additionally, the tile provider system can dynamically update a user experience by changing information indicated by the tile specification 205 for the type 220, thereby enabling the client device to render the user interface tile 210 based on the changed information and the user interface tile template 215. This reduces the complexity associated with updating or changing user experiences by tile provider system defining or configuring the user experiences in a channel-agnostic manner using the tile specification 205.

As indicated above, Fig. 2 is provided as an example. Other examples may differ from what is described with regard to Fig. 2.

Fig. 3 is a diagram of an example 300 associated with a tile provider system 305 for dynamic user interface tiles. The tile provider system 305 may communicate the one or more client devices 310 via a communication interface 315. The tile provider system 305 may be, or may be similar to, the tile provider system described in connection with Figs. 1A-1C and 2. similarly, the one or more client devices 310 may be, or may be similar to, the client device described in connection with Figs. 1A-1C and 2.

The one or more communication interfaces 315 may include a wireless connection and/or a wired connection. In some implementations, the one or more communication interfaces 315 may include one or more APIs, a transmission control protocol (TCP) interface, a message queue interface, a remote procedure call interface, a simple mail transfer protocol (SMTP) interface, a simple object access protocol (SOAP) interface, and/or an Internet protocol (IP) interface, among other examples. For example, the tile provider system 305 and the one or more client devices 310 may be configured to communicate one or more tile specifications, and/or capability information, among other examples, via the one or more communication interfaces 315.

The client device(s) 310 may include a rendering component (e.g., an engine) configured to interpret and/or decode tile specifications and render user interface tiles. The engine may include a plugin or module configured for interpreting and/or decoding tile specifications, such as the tile specification 205. The client device(s) 310 may include, or be configured to access, one or more libraries. For example, the one or more libraries may include a tile type library, and/or an action library, among other examples. A tile type library may include user interface tile templates (such as the user interface tile template 215) for respective types (such as the type 220) of user interface tiles. An action library may include information for different types of actions to be performed by the client device(s) 310, such as the one or more actions 240. The one or more libraries may include information that is specific to a channel, a framework (e.g., a coding framework), and/or ecosystem, among other examples in which a given client device 310 is configured to operate. This enables the client device 310 to obtain the information (e.g., that is specific to a channel, a framework (e.g., a coding framework), and/or ecosystem) as part of interpreting and/or decoding tile specifications, thereby enabling the client device to render the user interface tiles (e.g., as defined by the tile specification(s)) in accordance with the channel, a framework (e.g., a coding framework), and/or ecosystem examples in which the given client device 310 is configured to operate.

As shown in Fig. 3, the tile provider system 305 may include one or more components, such as a tile hub component 320, one or more tile provider components 325, a tile utility component 330, and/or one or more tile registries 335, among other examples. The tile hub component 320 may be configured to route requests for user experiences to a given tile provider component 325. For example, the tile hub component 320 may be a routing component that is configured to route requests for user experiences based on a type of user experience, and/or a client device 310 that transmitted the request(s), among other examples. For example, one or more tile provider components 325 may include a generic tile provider component and/or one or more service tile provider components. The one or more service tile provider components may be configured to generate tile specifications for respective services or respective user experiences (e.g., a service tile provider may be specific to a given user experience). The generic tile provider component may be configured to generate tile specifications for all other user experiences (e.g., that are not associated with a service tile provider components).

For example, a tile provider component 325 may be configured to obtain data from one or more data sources to be included in a tile specification. The tile provider component 325 may be configured to transmit, to one or more data sources, a request for data associated with a client device 310 (e.g., associated with an account or user that is associated with the client device 310) that transmitted a request for a user experience. The tile provider component 325 may be configured to receive, from the one or more data sources, the data (sometimes referred to herein as "dynamic" data). The tile provider component 325 may be configured to communicate with the one or more tile utility components 330 to generate the tile specification(s).

For example, the tile utility component 330 may include a resolver component 340 and a hydrator component 345. The tile utility component 330 may be associated with a single interface (e.g., a single communication interface). For example, the tile provider component 325 may communicate with the tile utility component 330 using the single interface. For example, the tile provider component 325 may transmit, and the tile utility component 330 may receive, the tile definition information via the single interface, as described in more detail elsewhere herein. The resolver component 340 and the hydrator component 345 may be functions of the tile utility component 330. For example, the resolver component 340 and the hydrator component 345 may be functions and/or sub-components of the tile utility component 330.

The resolver component 340 may be configured to identify one or more tile specifications and/or one or more user interface tile templates 215 for an indicated user experience using the tile definition information. For example, the tile provider component 325 may transmit, and the tile utility component 330may receive, the tile definition information. The resolver component 340 may identify (e.g., from the one or more tile registries 335) one or more tile specifications and/or one or more user interface tile templates 215 for the user experience based on the tile definition information, as described in more detail elsewhere herein. The one or more tile registries 335 may store tile specifications, configurations, capability information, among other examples, for various user experiences.

The hydrator component 345 may be configured to insert information into one or more tile specifications. For example, the one or more tile specifications and/or one or more user interface tile templates 215 obtained by the resolver component 340 may include one or more placeholder fields to be replaced with data (e.g., the dynamic data for the client device 310) to generate a tile specification that can be used by the client device 310 for rendering one or more user interface tiles. The hydrator component 345 may insert the data into the one or more tile specifications to generate one or more tile specifications that are ready for rendering by the client device 310. The tile utility component 330may transmit, and the tile provider component 325 may receive, the one or more tile specifications (e.g., hydrated tile specification(s)). The tile provider component 325 may cause the one or more tile specifications to be transmitted to the client device 310 (e.g., via the tile hub component 320). For example, the tile provider system 305 may transmit, and the client device 310 may receive, the one or more tile specifications (e.g., hydrated tile specification(s)) via the communication interface 315.

The client device 310 may render one or more user interface tiles based on the one or more tile specifications and the libraries described above. For example, the engine of the client device may be configured to render the one or more user interface tiles based on the one or more tile specifications and the libraries. The client device 310 may display the one or more user interface tiles via a user interface (e.g., a GUI).

As indicated above, Fig. 3 is provided as an example. Other examples may differ from what is described with regard to Fig. 3.

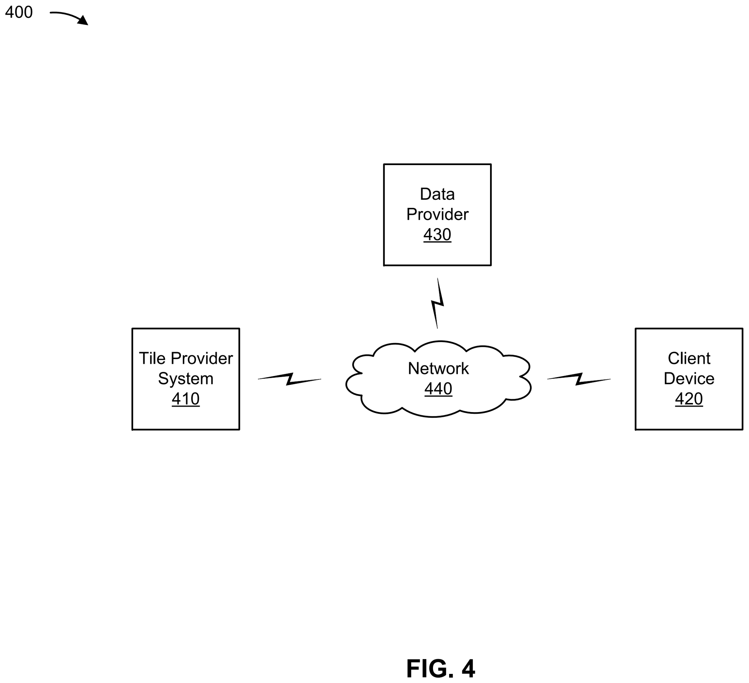

Fig. 4 is a diagram of an example environment 400 in which systems and/or methods described herein may be implemented. As shown in Fig. 4, environment 400 may include a tile provider system 410 (e.g., the tile provider system 305), a client device (e.g., the client device 310), a data provider 430, and a network 440. Devices of environment 400 may interconnect via wired connections, wireless connections, or a combination of wired and wireless connections.

The tile provider system 410 may include one or more devices capable of receiving, generating, storing, processing, providing, and/or routing information associated with resolving and hydrating dynamic tile specifications, as described elsewhere herein. The tile provider system 410 may include a communication device and/or a computing device. For example, the tile provider system 410 may include a server, such as an application server, a client server, a web server, a database server, a host server, a proxy server, a virtual server (e.g., executing on computing hardware), or a server in a cloud computing system. In some implementations, the tile provider system 410 may include computing hardware used in a cloud computing environment.

The client device 420 may include one or more devices capable of receiving, generating, storing, processing, and/or providing information associated with resolving and hydrating dynamic tile specifications, as described elsewhere herein. The client device 420 may include a communication device and/or a computing device. For example, the client device 420 may include a wireless communication device, a mobile phone, a user equipment, a laptop computer, a tablet computer, a desktop computer, a wearable communication device (e.g., a smart wristwatch, a pair of smart eyeglasses, a head mounted display, or a virtual reality headset), or a similar type of device.

The data provider 430 may include one or more devices capable of receiving, generating, storing, processing, and/or providing information associated with resolving and hydrating dynamic tile specifications, as described elsewhere herein. The data provider 430 may include a communication device and/or a computing device. For example, the data provider 430 may include a database, a server, a database server, an application server, a client server, a web server, a host server, a proxy server, a virtual server (e.g., executing on computing hardware), a server in a cloud computing system, a device that includes computing hardware used in a cloud computing environment, or a similar type of device. The data provider 430 may communicate with one or more other devices of environment 400, as described elsewhere herein. As described elsewhere herein, the data provider 430 may provide dynamic data for populating (e.g., hydrating) tile specifications for dynamic user interface tiles.

The network 440 may include one or more wired and/or wireless networks. For example, the network 440 may include a wireless wide area network (e.g., a cellular network or a public land mobile network), a local area network (e.g., a wired local area network or a wireless local area network (WLAN), such as a Wi-Fi network), a personal area network (e.g., a Bluetooth network), a near-field communication network, a telephone network, a private network, the Internet, and/or a combination of these or other types of networks. The network 440 enables communication among the devices of environment 400.

The number and arrangement of devices and networks shown in Fig. 4 are provided as an example. In practice, there may be additional devices and/or networks, fewer devices and/or networks, different devices and/or networks, or differently arranged devices and/or networks than those shown in Fig. 4. Furthermore, two or more devices shown in Fig. 4 may be implemented within a single device, or a single device shown in Fig. 4 may be implemented as multiple, distributed devices. Additionally, or alternatively, a set of devices (e.g., one or more devices) of environment 400 may perform one or more functions described as being performed by another set of devices of environment 400.

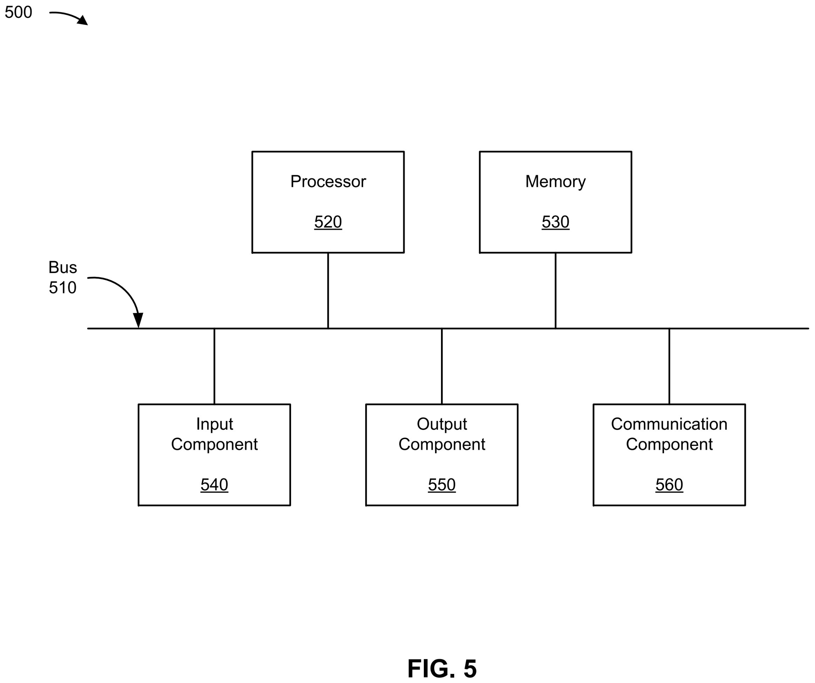

Fig. 5 is a diagram of example components of a device 500 associated with resolving and hydrating dynamic tile specifications. The device 500 may correspond to a tile provider system (e.g., the tile provider system 305 and/or the tile provider system 410), a client device (e.g., the client device 310 and/or the client device 420), and/or the data provider 430. In some implementations, a tile provider system (e.g., the tile provider system 305 and/or the tile provider system 410), a client device (e.g., the client device 310 and/or the client device 420), and/or the data provider 430 may include one or more devices 500 and/or one or more components of the device 500. As shown in Fig. 5, the device 500 may include a bus 510, a processor 520, a memory 530, an input component 540, an output component 550, and/or a communication component 560.

The bus 510 may include one or more components that enable wired and/or wireless communication among the components of the device 500. The bus 510 may couple together two or more components of Fig. 5, such as via operative coupling, communicative coupling, electronic coupling, and/or electric coupling. For example, the bus 510 may include an electrical connection (e.g., a wire, a trace, and/or a lead) and/or a wireless bus. The processor 520 may include a central processing unit, a graphics processing unit, a microprocessor, a controller, a microcontroller, a digital signal processor, a field-programmable gate array, an application-specific integrated circuit, and/or another type of processing component. The processor 520 may be implemented in hardware, firmware, or a combination of hardware and software. In some implementations, the processor 520 may include one or more processors capable of being programmed to perform one or more operations or processes described elsewhere herein.

The memory 530 may include volatile and/or nonvolatile memory. For example, the memory 530 may include random access memory (RAM), read only memory (ROM), a hard disk drive, and/or another type of memory (e.g., a flash memory, a magnetic memory, and/or an optical memory). The memory 530 may include internal memory (e.g., RAM, ROM, or a hard disk drive) and/or removable memory (e.g., removable via a universal serial bus connection). The memory 530 may be a non-transitory computer-readable medium. The memory 530 may store information, one or more instructions, and/or software (e.g., one or more software applications) related to the operation of the device 500. In some implementations, the memory 530 may include one or more memories that are coupled (e.g., communicatively coupled) to one or more processors (e.g., processor 520), such as via the bus 510. Communicative coupling between a processor 520 and a memory 530 may enable the processor 520 to read and/or process information stored in the memory 530 and/or to store information in the memory 530.

The input component 540 may enable the device 500 to receive input, such as user input and/or sensed input. For example, the input component 540 may include a touch screen, a keyboard, a keypad, a mouse, a button, a microphone, a switch, a sensor, a global positioning system sensor, a global navigation satellite system sensor, an accelerometer, a gyroscope, and/or an actuator. The output component 550 may enable the device 500 to provide output, such as via a display, a speaker, and/or a light-emitting diode. The communication component 560 may enable the device 500 to communicate with other devices via a wired connection and/or a wireless connection. For example, the communication component 560 may include a receiver, a transmitter, a transceiver, a modem, a network interface card, and/or an antenna.

The device 500 may perform one or more operations or processes described herein. For example, a non-transitory computer-readable medium (e.g., memory 530) may store a set of instructions (e.g., one or more instructions or code) for execution by the processor 520. The processor 520 may execute the set of instructions to perform one or more operations or processes described herein. In some implementations, execution of the set of instructions, by one or more processors 520, causes the one or more processors 520 and/or the device 500 to perform one or more operations or processes described herein. In some implementations, hardwired circuitry may be used instead of or in combination with the instructions to perform one or more operations or processes described herein. Additionally, or alternatively, the processor 520 may be configured to perform one or more operations or processes described herein. Thus, implementations described herein are not limited to any specific combination of hardware circuitry and software.

The number and arrangement of components shown in Fig. 5 are provided as an example. The device 500 may include additional components, fewer components, different components, or differently arranged components than those shown in Fig. 5. Additionally, or alternatively, a set of components (e.g., one or more components) of the device 500 may perform one or more functions described as being performed by another set of components of the device 500.

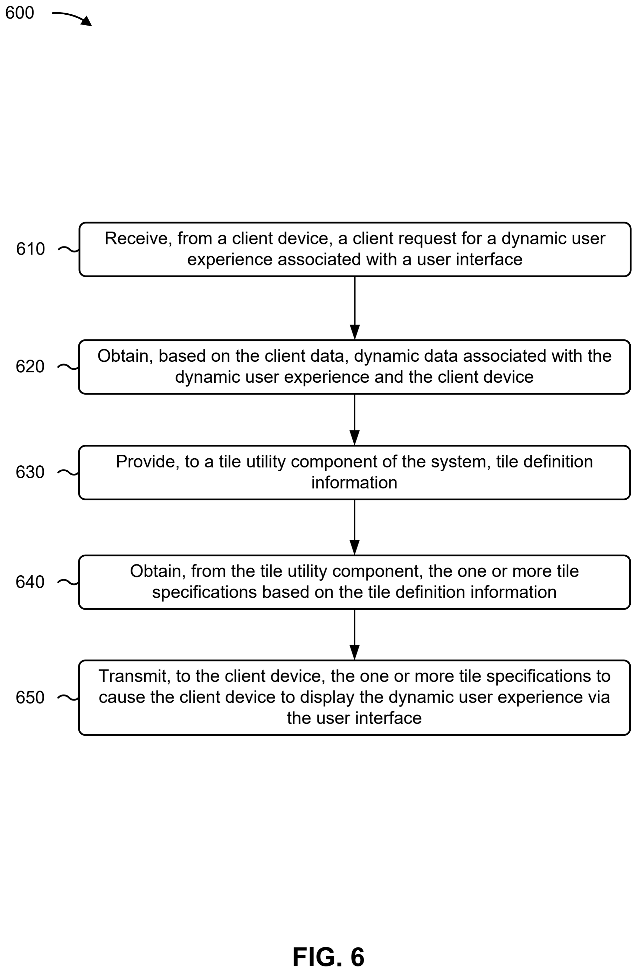

Fig. 6 is a flowchart of an example process 600 associated with resolving and hydrating dynamic tile specifications. In some implementations, one or more process blocks of Fig. 6 may be performed by a tile provider system (e.g., the tile provider system 305 and/or the tile provider system 410). In some implementations, one or more process blocks of Fig. 6 may be performed by another device or a group of devices separate from or including the tile provider system, such as a client device (e.g., the client device 310 and/or the client device 420), the data provider 430, and/or one or more components included in the tile provider system (e.g., the tile hub component 320, a tile provider component 325, the tile utility component 330, and/or a tile registry 335). Additionally, or alternatively, one or more process blocks of Fig. 6 may be performed by one or more components of the device 500, such as processor 520, memory 530, input component 540, output component 550, and/or communication component 560.

As shown in Fig. 6, process 600 may include receiving, from a client device, a client request for a dynamic user experience associated with a user interface (block 610). For example, the tile provider system (e.g., using processor 520, memory 530, input component 540, and/or communication component 560) may receive, from a client device, a client request for a dynamic user experience associated with a user interface, as described above in connection with reference number 110 of Fig. 1A. As an example, the client request may indicate client data associated with the client device. A user may interact with the user interface to cause the client device to request the dynamic user experience.

As further shown in Fig. 6, process 600 may include obtaining, based on the client data, dynamic data associated with the dynamic user experience and the client device (block 620). For example, the tile provider system (e.g., using processor 520 and/or memory 530) may obtain, based on the client data, dynamic data associated with the dynamic user experience and the client device, as described above in connection with reference number 135 of Fig. 1B. As an example, the dynamic data may be data indicated by a data request. The tile provider system may obtain the dynamic data from a data provider (e.g., one or more data sources).

As further shown in Fig. 6, process 600 may include providing, to a tile utility component of the system, tile definition information (block 630). For example, the tile provider system (e.g., using processor 520 and/or memory 530) may provide, to a tile utility component of the system, tile definition information, as described above in connection with reference number 145 of Fig. 1C. In some implementations, the tile definition information includes the client data, an indication of the dynamic user experience, and the dynamic data. In some implementations, the tile definition information enables the tile utility component to resolve and hydrate one or more tile specifications for the dynamic user experience. In some implementations, the tile provider system may provide the tile definition information via an interface (e.g., an API endpoint). In some implementations, the tile provider system may include the tile definition information in a resolve-hydrate request for the dynamic user experience.

As further shown in Fig. 6, process 600 may include obtaining, from the tile utility component, the one or more tile specifications based on the tile definition information (block 640). For example, the tile provider system (e.g., using processor 520 and/or memory 530) may obtain, from the tile utility component, the one or more tile specifications based on the tile definition information, as described above in connection with reference number 165 of Fig. 1C. The tile provider system may obtain the one or more tile specifications via the interface (e.g., via the same API endpoint to which the tile definition information was provided). The tile provider system may obtain the one or more tile specifications based on providing the tile definition information. The one or more tile specifications may be hydrated tile specifications.

As further shown in Fig. 6, process 600 may include transmitting, to the client device, the one or more tile specifications to cause the client device to display the dynamic user experience via the user interface (block 650). For example, the tile provider system (e.g., using processor 520, memory 530, and/or communication component 560) may transmit, to the client device, the one or more tile specifications to cause the client device to display the dynamic user experience via the user interface, as described above in connection with reference number 170 of Fig. 1D. As an example, the one or more tile specifications may enable the client device to extract user interface information to locally render one or more user interface tiles for the requested dynamic user interface.

Although Fig. 6 shows example blocks of process 600, in some implementations, process 600 may include additional blocks, fewer blocks, different blocks, or differently arranged blocks than those depicted in Fig. 6. Additionally, or alternatively, two or more of the blocks of process 600 may be performed in parallel. The process 600 is an example of one process that may be performed by one or more devices described herein. These one or more devices may perform one or more other processes based on operations described herein, such as the operations described in connection with Figs. 1A-1D, 2, and 3. Moreover, while the process 600 has been described in relation to the devices and components of the preceding figures, the process 600 can be performed using alternative, additional, or fewer devices and/or components. Thus, the process 600 is not limited to being performed with the example devices, components, hardware, and software explicitly enumerated in the preceding figures.

The foregoing disclosure provides illustration and description, but is not intended to be exhaustive or to limit the implementations to the precise forms disclosed. Modifications may be made in light of the above disclosure or may be acquired from practice of the implementations.

As used herein, the term "component" is intended to be broadly construed as hardware, firmware, or a combination of hardware and software. It will be apparent that systems and/or methods described herein may be implemented in different forms of hardware, firmware, and/or a combination of hardware and software. The hardware and/or software code described herein for implementing aspects of the disclosure should not be construed as limiting the scope of the disclosure. Thus, the operation and behavior of the systems and/or methods are described herein without reference to specific software code - it being understood that software and hardware can be used to implement the systems and/or methods based on the description herein.

As used herein, satisfying a threshold may, depending on the context, refer to a value being greater than the threshold, greater than or equal to the threshold, less than the threshold, less than or equal to the threshold, equal to the threshold, not equal to the threshold, or the like.

Although particular combinations of features are recited in the claims and/or disclosed in the specification, these combinations are not intended to limit the disclosure of various implementations. In fact, many of these features may be combined in ways not specifically recited in the claims and/or disclosed in the specification. Although each dependent claim listed below may directly depend on only one claim, the disclosure of various implementations includes each dependent claim in combination with every other claim in the claim set. As used herein, a phrase referring to "at least one of" a list of items refers to any combination and permutation of those items, including single members. As an example, "at least one of: a, b, or c" is intended to cover a, b, c, a-b, a-c, b-c, and a-b-c, as well as any combination with multiple of the same item. As used herein, the term "and/or" used to connect items in a list refers to any combination and any permutation of those items, including single members (e.g., an individual item in the list). As an example, "a, b, and/or c" is intended to cover a, b, c, a-b, a-c, b-c, and a-b-c.

When "a processor" or "one or more processors" (or another device or component, such as "a controller" or "one or more controllers") is described or claimed (within a single claim or across multiple claims) as performing multiple operations or being configured to perform multiple operations, this language is intended to broadly cover a variety of processor architectures and environments. For example, unless explicitly claimed otherwise (e.g., via the use of "first processor" and "second processor" or other language that differentiates processors in the claims), this language is intended to cover a single processor performing or being configured to perform all of the operations, a group of processors collectively performing or being configured to perform all of the operations, a first processor performing or being configured to perform a first operation and a second processor performing or being configured to perform a second operation, or any combination of processors performing or being configured to perform the operations. For example, when a claim has the form "one or more processors configured to: perform X; perform Y; and perform Z," that claim should be interpreted to mean "one or more processors configured to perform X; one or more (possibly different) processors configured to perform Y; and one or more (also possibly different) processors configured to perform Z."

No element, act, or instruction used herein should be construed as critical or essential unless explicitly described as such. Also, as used herein, the articles "a" and "an" are intended to include one or more items, and may be used interchangeably with "one or more." Further, as used herein, the article "the" is intended to include one or more items referenced in connection with the article "the" and may be used interchangeably with "the one or more." Furthermore, as used herein, the term "set" is intended to include one or more items (e.g., related items, unrelated items, or a combination of related and unrelated items), and may be used interchangeably with "one or more." Where only one item is intended, the phrase "only one" or similar language is used. Also, as used herein, the terms "has," "have," "having," or the like are intended to be open-ended terms. Further, the phrase "based on" is intended to mean "based, at least in part, on" unless explicitly stated otherwise. Also, as used herein, the term "or" is intended to be inclusive when used in a series and may be used interchangeably with "and/or," unless explicitly stated otherwise (e.g., if used in combination with "either" or "only one of").

## Claims

1. A method for resolving and hydrating dynamic tile specifications, comprising:
receiving, by a system and from a client device, a client request for a dynamic user experience associated with a user interface, wherein the client request indicates client data associated with the client device;
obtaining, by the system and based on the client data, dynamic data associated with the dynamic user experience and the client device;
providing, by the system and to a tile utility component of the system, tile definition information, wherein the tile definition information includes the client data, an indication of the dynamic user experience, and the dynamic data, and wherein the tile definition information enables the tile utility component to resolve and hydrate one or more tile specifications for the dynamic user experience;
obtaining, by the system and from the tile utility component, the one or more tile specifications based on the tile definition information; and
transmitting, by the system and to the client device, the one or more tile specifications to cause the client device to display the dynamic user experience via the user interface.

2. The method of claim 1, wherein providing the tile definition information comprises:
providing the tile definition information to a single application programming interface endpoint associated with the tile utility component.

3. The method of any one of the preceding claims, further comprising:
determining, by the tile utility component, one or more identifiers of the one or more tile specifications;
obtaining, from a database and based on the one or more identifiers, one or more objects associated with the identifiers of the one or more tile specifications; and
inserting the dynamic data into the one or more objects to generate the one or more tile specifications.

4. The method of any one of the preceding claims, wherein the dynamic user experience is associated with multiple variants of the dynamic user experience,
wherein the dynamic user experience is associated with one or more segmentation parameters indicating deployment segmentations for the multiple variants,
wherein the one or more tile specifications indicate one or more variants of the multiple variants, and
the method further comprising: determining, by the tile utility component, the one or more variants based on the one or more segmentation parameters and the dynamic data.

5. The method of claim 4, further comprising:
obtaining user engagement information associated with the one or more variants; and
updating, based on the user engagement information, the one or more segmentation parameters.

6. The method of any one of the preceding claims, further comprising:
determining, by the tile utility component, whether the client device supports the one or more tile specifications based on:
capability information indicating one or more client capabilities supported by the client device for dynamic user interface tiles,
the one or more tile specifications, and
the dynamic data; and
providing, by the tile utility component, the one or more tile specifications based on determining that the client device supports the one or more tile specifications.

7. The method of any one of the preceding claims, further comprising:
determining, by the tile utility component, one or more segments to be associated with the dynamic user experience based on the client data and the dynamic data, wherein the one or more segments are associated with respective variants of the dynamic user experience; and
generating, by the tile utility component, the one or more tile specifications based on the one or more segments.

8. The method of any one of the preceding claims, wherein
(a) the tile utility component is associated with a single application programming interface endpoint; and/or
(b) the tile definition information is included in a resolve-hydrate request to the tile utility component.

9. A system comprising:
a tile provider configured to:
receive a client request for a dynamic user experience associated with a user interface, wherein the client request indicates client data;
obtain, based on the client data, dynamic data associated with the dynamic user experience and the client data;
provide, to a tile utility component, tile definition information, wherein the tile definition information includes the client data, an indication of the dynamic user experience, and the dynamic data, and wherein the tile definition information enables the tile utility component to resolve and hydrate one or more tile specifications for the dynamic user experience;
obtain, from the tile utility component, the one or more tile specifications based on the tile definition information; and
transmit the one or more tile specifications to cause a client device to display the dynamic user experience via the user interface; and
the tile utility component configured to:
determine, based on the tile definition information, one or more identifiers of the one or more tile specifications;
obtain, from a database and based on the one or more identifiers, one or more objects associated with the identifiers of the one or more tile specifications; and
insert the dynamic data into the one or more objects to generate the one or more tile specifications.

10. The system of claim 9, wherein the tile provider, to provide the tile definition information, is configured to:
provide the tile definition information to a single application programming interface endpoint associated with the tile utility component.

11. The system of claim 9 or 10, wherein the tile provider, to obtain the one or more tile specifications, is configured to:
obtain the one or more tile specifications from the single application programming interface endpoint.

12. The system of any one of claims 9 to 11, wherein the dynamic user experience is associated with multiple variants of the dynamic user experience,
wherein the dynamic user experience is associated with one or more segmentation parameters indicating deployment segmentations for the multiple variants,
wherein the one or more tile specifications indicate one or more variants of the multiple variants, and
wherein the tile utility component is configured to determine the one or more variants based on the one or more segmentation parameters and the dynamic data.

13. The system of any one of claims 9 to 12, wherein the tile utility component is configured to:
determine whether the client device supports the one or more tile specifications based on:
capability information indicating one or more client capabilities supported by the client device for dynamic user interface tiles, and
the dynamic data; and
provide the one or more tile specifications to the tile provider based on determining that the client device supports the one or more tile specifications.

14. The system of any one of claims 9 to 13, wherein the tile utility component is configured to:
determine one or more segments to be associated with the dynamic user experience based on the client data and the dynamic data, wherein the one or more segments are associated with respective variants of the dynamic user experience; and
generate the one or more tile specifications based on the one or more segments.

15. A system arranged to carry out the method of any one of claims 1 to 8.
